# EUROPÄISCHE PATENTANMELDUNG

(11) **EP 0 523 476 A1**
(43) Veröffentlichungstag der Anmeldung: **20.01.1993**
(21) Anmeldenummer: 92111304.9
(22) Anmeldetag: 03.07.1992
(51) Int. Cl.: B01D 17/04

(54) **Verfahren zur weitestgehenden Rückgewinnung von mit Wasser nicht mischbaren organischen Lösungsmitteln**

(30) Priorität: 13.07.1991 DE 4123244
(71) Anmelder: BASF Aktiengesellschaft, D-67063 Ludwigshafen (DE)
(72) Erfinder: Saukel, Heinz, Dr., W-6701 Friedelsheim (DE); Sander, Bruno, Dr., W-6700 Ludwigshafen (DE)

(57) **Zusammenfassung**

Verfahren zur weitestgehenden Rückgewinnung von mit Wasser nicht mischbaren organischen Lösungsmitteln aus Mutterlaugen und Waschwässern, die bei in wasserhaltigem Medium durchgeführten oder aufgearbeiteten Synthese- und Trennverfahren anfallen, indem man diesen lösungsmittelhaltigen Mutterlaugen und Waschwässern nichtionogene polyalkoxylierte grenzflächenaktive Substanzen in einer Menge von 10 bis 1000 ppm, bezogen auf das Gesamtgewicht der lösungsmittelhaltigen Mutterlaugen und Waschwässer, zugibt, das Gemisch intensiv durchmischt und danach eine Trennung der organischen von der wäßrigen Phase unter dem Einfluß der Schwerkraft durchführt.

## Beschreibung

Die vorliegende Erfindung betrifft ein verbessertes Verfahren zur weitestgehenden Rückgewinnung von mit Wasser nicht mischbaren organischen Lösungsmitteln aus Mutterlaugen und Waschwässern, die bei in wasserhaltigem Medium durchgeführten oder aufgearbeiteten Synthese- und Trennverfahren anfallen.

Bei vielen in technischem Maßstab durchgeführten Synthese- und Trennverfahren, beispielsweise bei der Herstellung von Küpenfarbstoffen in einem mit Wasser nicht mischbaren organischen Lösungsmittel wie Nitrobenzol, fallen Mutterlaugen und Waschwässer an, die infolge beispielsweise des Waschens und Ausdämpfens eines festen Produktes mit Wasser Zweiphasengemische oder Emulsionen des Lösungsmittels mit Wasser darstellen. Diese Zweiphasengemische oder Emulsionen können neben beispielsweise Nitrobenzol und Wasser noch organische Nebenprodukte in der organischen Phase und anorganische Salze wie z.B. Kaliumcarbonat, Kaliumhydrogensulfat und Ammoniumsulfat in der wäßrigen Phase enthalten.

Um dieses organische Lösungsmittel einer Wiederverwertung zuführen zu können, muß es aus dem Lösungsmittel-Wasser-Gemisch abgetrennt, gegebenenfalls mit Wasser salzfrei gewaschen und schließlich der Destillation unterworfen werden.

Die Phasentrennung Lösungsmittel/Wasser beispielsweise in einem Phasenscheider unter dem Einfluß der Schwerkraft ist in der Regel zeitaufwendig und fast immer unvollständig, da sich zwischen den beiden Phasen eine nicht scharf abgegrenzte Zone aus mitunter schleimartigen Schwebstoffen (Mulm) ausbildet. Diese Mulmschicht stellt eine stabile Lösungsmittel/Wasser-Emulsion dar, die bei niedrigen Wasserstoffionenkonzentrationen (z.B. pH-Wert 10-11) bevorzugt gebildet und durch Oberflächenkräfte von Feststoffpartikeln (Abrieb oder Reste eines festen Produktes, z.B. Farbstoffreste) stabilisiert wird.

Ein Zusatz von Säuren zum Brechen dieser Emulsion und zur Verminderung des Mulms ist aus apparativen und/oder verfahrenstechnischen Gründen sehr oft nicht möglich.

Infolge der Mulmbildung ist eine automatische Erfassung der Phasengrenzfläche durch radioaktive Detektion oder durch Leitfähigkeitsmessung nicht möglich. Bei Dichte und Leitfähigkeit sind nur allmähliche und geringe Übergänge feststellbar.

Da das zur Destillation gelangende Lösungsmittel möglichst frei von Wasser sein sollte, erfolgt seine Abtrennung mit großer Vorsicht. Dies bedeutet, daß außer der lösungsmittelhaltigen Mulmschicht in der Regel noch weitere Mengen an Lösungsmittel in der wäßrigen Phase verbleiben und für die Rückgewinnung verloren gehen.

Wegen des Lösungsmittelgehalts der wäßrigen Phase ist eine Entsorgung als Abwasser in einer zentralen Kläranlage oft sehr problematisch. So muß meist eine kostenintensive Vor-Ort-Abwasserbehandlung wie z.B. eine Strippung oder eine Extraktion zur Abtrennung des Lösungsmittels durchgeführt werden.

Aufgabe der Erfindung war es somit, ein einfaches und sicheres Verfahren zu entwickeln, bei dem eine möglichst vollständige Phasentrennung von organischem Lösungsmittel und Wasser erfolgt, die Ausbildung einer Mulmschicht unterbleibt und das organische Lösungsmittel nahezu vollständig zurückgewonnen und einer Wiederverwertung zugeführt werden kann.

Demgemäß wurde ein Verfahren zur weitestgehenden Rückgewinnung von mit Wasser nicht mischbaren organischen Lösungsmitteln aus Mutterlaugen und Waschwässern, die bei in wasserhaltigem Medium durchgeführten oder aufgearbeiteten Synthese- und Trennverfahren anfallen, gefunden, welches dadurch gekennzeichnet ist, daß man diesen lösungsmittelhaltigen Mutterlaugen und Waschwässern nichtionogene polyalkoxylierte grenzflächenaktive Substanzen in einer Menge von 10 bis 1000 ppm, bezogen auf das Gesamtgewicht der lösungsmittelhaltigen Mutterlaugen und Waschwässer, zugibt, das Gemisch intensiv durchmischt und danach eine Trennung der organischen von der wäßrigen Phase unter dem Einfluß der Schwerkraft durchführt.

Als nichtionogene polyalkoxylierte oberflächenaktive Substanzen eignen sich vor allem:
- Ethylenoxid- oder Propylenoxid-Polymerisate;
- statistische oder Block-Copolymerisate aus Ethylenoxid und Propylenoxid;
- polyalkoxlierte Etherdiole wie mit 2 bis 100 mol Ethylenoxid und/oder Propylenoxid ungesetztes Dipropylenglykol, z.B. Dipropylenglykol, welches zuerst mit 34 mol Propylenoxid und danach mit 29 mol Ethylenoxid umgesetzt wurde;
- polyalkoxylierte Fettalkohole oder Ziegler- oder Oxoalkohole, z.B. mit 1 bis 50 mol, insbesondere 2 bis 30 mol Ethylenoxid und/oder Propylenoxid umgesetzte geradkettige oder in geringem Maße verzweigte, d.h. maximal 3 Methyl- oder Ethylseitenketten enthaltende C₈- bis C₂₀-Alkanole wie Decylalkohol, Laurylalkohol, Myristylalkohol, Cetylalkohol, Stearylalkohol, C₁₀-/C₁₂-Ziegler- oder -Oxoalkohol, C₁₂-/C₁₄-Ziegler- oder -Oxoalkohol, C₁₆-/C₁₈-Ziegler- oder -Oxoalkohol oder C₁₃-/C₁₅-Oxoalkohol;
- polyalkoxylierte Alkylphenole, z.B. mit 1 bis 50 mol, insbesondere 2 bis 30 mol Ethylenoxid und/oder Propylenoxid umgesetzte Mono- oder Di-C₁-C₁₂-Alkylphenole wie Kresole, Xylenole, Mono- oder Di-tert.-Butylphenole, Thymol, Carvacrol, Octylphenol, 4-tert.-Butylphenol, Nonylphenol, Isononylphenol oder Dodecylphenol;
- polyalkoxylierte Alkylphenol-Formaldehyd-Harze, d.h. Kondensationsprodukte aus den obengenannten polyalkoxylierten Alkylphenolen und Formaldehyd, wobei die Alkoxylierung der phenolischen OH-Gruppe in der Regel nach dem Kondensationsschritt des Alkylphenols mit dem Formaldehyd erfolgt.

Besonders bevorzugte nichtionogene polyalkoxylierte grenzflächenaktive Substanzen sind mit 2 bis 30 mol Ethylenoxid und/oder Propylenoxid umgesetzte längerkettige, d.h. Mono-C₅- bis C₁₂-Alkylphenole sowie deren Kondensationsprodukte mit Formaldehyd, wobei die Alkoxylierung der phenolischen OH-Gruppen in der Regel nach dem Kondensationsschritt des Alkylphenols mit dem Formaldehyd erfolgt.

Die nichtionogenen polyalkoxylierten grenzflächenaktiven Substanzen können auch in geringen Mengen, etwa bis zu 5 Gew.-%, bezogen auf das Gesamtgewicht der oberflächenaktiven Substanzen, Nebenbestandteile oder Hilfsmittel enthalten, die beispielsweise aus deren Herstellung herrühren. Derartige Nebenbestandteile oder Hilfsmittel sind z.B. Polyethylenimine oder Morpholin.

Die in Frage kommenden grenzflächenaktiven Substanzen sind meist in Wasser unlöslich oder nur wenig löslich, im betreffenden organischen Lösungsmittel jedoch löslich. Die genannten polyalkoxylierten Alkylphenol-Formaldehyd-Harze sind als 50 bis 70 gew.-%ige Lösungen in einem organischen Lösungsmittel wie Xylol oder Methanol im Handel erhältlich; sie sind klare, farblose bis gelbe Flüssigkeiten, deren Viskositäten bei 20°C (gemessen nach DIN 53 015) im Bereich von 20 bis 250 mm²/s und deren Dichten bei 20°C (gemessen nach DIN 51 757) im Bereich von 0,9 bis 1,1 g/cm³ liegen.

Die grenzflächenaktiven Substanzen können beim erfindungsgemäßen Verfahren prinzipell in konzentrierter, d.h. unverdünnter Form zugegeben werden. Es hat sich aber als vorteilhaft erwiesen, sie mit einem organischen Lösungsmittel, insbesondere mit dem zurückzugewinnenden, zu verdünnen und als 1 bis 20 gew.-%ige, insbesondere als 5 bis 10 gew.-%ige Gebrauchslösungen einzusetzen. Auf diese Weise können sie besser in den zu behandelnden Medien verteilt werden. Im allgemeinen ist dann auch die erforderliche Dosiermenge geringer.

Die Dosiermengen liegen im Bereich von 10 bis 1000 ppm, insbesondere von 50 bis 800 ppm, bezogen auf das Gesamtgewicht des lösungsmittelhaltigen Gemisches. Sie sind abhängig von der Art der Inhaltsstoffe und vom Phasenverhältnis organisches Lösungsmittel/Wasser.

Mit Wasser nicht mischbare organische Lösungsmittel, die durch das erfindungsgemäße Verfahren rückgewonnen werden können, sind vornehmlich Kohlenwasserstoffe, Halogenkohlenwasserstoffe, Carbonsäureester oder Ether. Insbesondere eignet sich das erfindungsgemäße Verfahren zur Rückgewinnung von Nitrobenzol, Chlorbenzol, Dichlorbenzolen, Toluol, Xylolen und Benzoesäuremethylester, daneben aber auch von Ligroinen oder Petrolethern, Methylenchlorid, Chloroform, Tetrachlormethan, Essigsäuremethyl- und ethylester, Diethylether und Diisopropylether. Besonders gute Resultate erzielt man bei der Rückgewinnung von Nitrobenzol.

Als in wasserhaltigem Medium durchgeführte oder aufgearbeitete Synthese- und Trennverfahren kommen vor allem solche in Betracht, bei denen eine Synthese in einem Medium durchgeführt wird, das ganz oder überwiegend aus dem mit Wasser nicht mischbaren organischen Lösungsmittel besteht, und bei denen ein festes Syntheseprodukt erzeugt wird, welches abfiltriert und mit Wasser oder einem wasserhaltigen Medium gewaschen und/oder mit Wasserdampf ausgedämpft wird. Die hierbei anfallenden wäßrigen lösungsmittelhaltigen Mutterlaugen und Waschwässer, wobei hierunter auch Kondensate zu verstehen sind, werden erfindungsgemäß behandelt. In der Regel enthalten diese Mutterlaugen und Waschwässer noch Produktreste, organische Bestandteile und anorganische Salze.

Von besonderer Bedeutung ist das erfindungsgemäße Verfahren für die Aufarbeitung derartiger Mutterlaugen und Waschwässer, die bei der Herstellung von Küpen- und Dispersionsfarbstoffen sowie von optischen Aufhellern anfallen. Ein Beispiel für solch eine Synthese ist die Herstellung des Küpenfarbstoffes Vat Green 1 (Colour Index 59825) in Nitrobenzol. Das erfindungsgemäße Verfahren läßt sich daneben beispielsweise auch bei der Herstellung bzw. Aufarbeitung von Hilfsmitteln und Zwischenprodukten, z.B. von Photoinitiatoren, anwenden.

Die allmähliche oder portionsweise Zugabe der nichtionogenen polyalkoxylierten grenzflächenaktiven Mittel zu dem zu trennenden lösungsmittelhaltigen Gemisch erfolgt normalerweise innerhalb von einigen Minuten bis wenigen Stunden, insbesondere innerhalb von 10 bis 60 Minuten, unter intensivem Durchmischen, üblicherweise durch Rühren.

Die Phasentrennung unter dem Einfluß der Schwerkraft kann vorteilhafterweise in demselben Behälter erfolgen. In einer anderen Ausführungsform wird das behandelte Gemisch in einen stehenden oder liegenden Phasenscheider übergeführt und darin die Trennoperation vollzogen. Die Phasentrennzeiten liegen vorwiegend im Bereich von 10 bis 60 Minuten, insbesondere von 20 bis 30 Minuten.

Die weitestgehend vom organischen Lösungsmittel befreite wäßrige Phase kann zur eventuellen Nachbehandlung in eine zentrale Kläranlage eingeleitet werden.

Die bei der Phasentrennung erhaltene organische Phase enthält in der Regel nur geringe Mengen an gelöstem Wasser, soweit dies die Stoffeigenschaften des organischen Lösungsmittels zulassen, aber kein Wasser in einer separaten zweiten Phase. Die organische Phase kann ohne Schwierigkeiten einer destillativen Regeneration unterworfen werden.

Es war überraschend, daß durch die erfindungsgemäßen Maßnahmen eine vollständige Phasentrennung unter Ausbildung einer scharfen Phasengrenzfläche mit großer Betriebssicherheit erfolgt.

Die wirtschaftlichen Vorteile des erfindungsgemäßen Verfahrens sind beträchtlich. Das organische Lösungsmittel kann nahezu vollständig rückgewonnen werden. Bei seiner destillativen Reinigung ist wegen des stark herabgesetzten Wassergehalts ein geringerer Energieeinsatz erforderlich. Da die Gesamttrennzeiten mindestens auf ein Viertel verkürzt werden, erfolgt eine Kapazitätserhöhung der Trennapparate mindestens auf das Vierfache.

Ein Vorteil des erfindungsgemäßen Verfahrens ist auch darin zu sehen, daß das Phasenverhältnis organisches Lösungsmittel/Wasser in den zu behandelnden Mutterlaugen und Waschwässern in weiten Grenzen, etwa von 1:10 bis 10:1, schwanken kann, ohne daß die Effektivität des erfindungsgemäßen Verfahrens beeinträchtigt würde.

Ein weiterer Vorteil des erfindungsgemäßen Verfahrens besteht darin, daß durch die Ausbildung scharfer Phasengrenzflächen große und meßtechnisch leicht erfaßbare Unterschiede bei der Leitfähigkeit vorliegen. Auf diese Weise kann die Phasentrennung mit Hilfe von Leitfähigkeitssonden automatisch gesteuert werden.

### Beispiel

In einem Rührbehälter wurde ein Gemisch, das gemäß Analyse aus 4500 kg Nitrobenzol, 3000 kg Wasser, 248 kg Kaliumcarbonat, 170 kg Kaliumhydrogensulfat und 132 kg Ammoniumsulfat bestand, vorgelegt. Dieses Gemisch stellte die beim üblichen Herstellungsverfahren des Küpenfarstoffs Vat Green 1 aus Oxybenzanyl anfallenden vereinigten Mutterlaugen, Waschwässer und Kondensate dar. Das Gemisch enthielt daher weiterhin in geringen Mengen Farbstoff und Farbstoffvorprodukte in gelöster oder dispergierter Form.

Unter Rühren wurden dann allmählich 3,5 kg einer 50 gew.-%igen Lösung eines mit Ethylenoxid umgesetzten Nonylphenol-Formaldehyd-Harzes in Xylol zugegeben. Diese Lösung hatte eine Viskosität bei 20°C (DIN 53 015) von 30 mm²/s und eine Dichte bei 20°C (DIN 51 757) von 0,96 g/cm³. Die Dosiermenge betrug 217 ppm, bezogen auf das Gesamtgewicht des Gemisches. Nach 30 Minuten war die Zugabe beendet und der Rührer wurde abgestellt.

Bereits nach weiteren 30 Minuten waren die Phasen vollständig getrennt. Es erfolgte keinerlei Mulmbildung. Die Phasengrenzfläche zwischen Nitrobenzol und wäßriger Phase war scharf. Das Nitrobenzol (untere Phase) konnte ohne Probleme aus dem Rührbehälter mit Hilfe einer Leitfähigkeitssonde automatisch abgelassen werden. Die Leitfähigkeit der Nitrobenzol-Phase betrug 175±10 µS/cm und die der Wasser-Phase 48 000 bis 50 000 µS/cm.

Das abgeschiedene Nitrobenzol war frei von überstehendem Wasser. Es konnten ca. 4640 kg Nitrobenzol, das nur noch gelöste Wasseranteile (ca. 3 Gew.-%) enthielt, der Destillation zugeführt werden. Der Restgehalt an Nitrobenzol in der Wasserphase betrug nur 0,15 Gew.-%.

### Vergleichsbeispiel

Ein Gemisch, das nach Menge und Zusammensetzung dem obengenannten Beispiel entsprach, mit Ausnahme des Zusatzes des grenzflächenaktiven Mittels, wurde 30 Minuten lang durch Rühren homogenisiert. Danach ließ man das Gemisch für einige Stunden stehen.

Es bildete sich eine ausgeprägte Mulmschicht zwischen der Nitrobenzol- und der Wasserphase. Nach 8 Stunden Trennzeit konnten bei visueller Kontrolle im Schauglas nur 2800 kg Nitrobenzol, das gelöstes Wasser und geringe Mengen überstehendes Wasser enthielt, abgetrennt und der Destillation zugeführt werden. Der Restgehalt an Nitrobenzol in einer homogenisierten Probe aus wäßriger Phase und Mulm betrug 18,5 Gew.-%.

## Patentansprüche

1. Verfahren zur weitestgehenden Rückgewinnung von mit Wasser nicht mischbaren organischen Lösungsmitteln aus Mutterlaugen und Waschwässern, die bei in wasserhaltigem Medium durchgeführten oder aufgearbeiteten Synthese- und Trennverfahren anfallen, dadurch gekennzeichnet, daß man diesen lösungsmittelhaltigen Mutterlaugen und Waschwässern nichtionogene polyalkoxylierte grenzflächenaktive Substanzen in einer Menge von 10 bis 1000 ppm, bezogen auf das Gesamtgewicht der lösungsmittelhaltigen Mutterlaugen und Waschwässer, zugibt, das Gemisch intensiv durchmischt und danach eine Trennung der organischen von der wäßrigen Phase unter dem Einfluß der Schwerkraft durchführt.

2. Verfahren nach Anspruch 1, dadurch gekennzeichnet, daß man hierbei als grenzflächenaktive Substanzen Ethylenoxid- oder Propylenoxid-Polymerisate, statistische oder Block-Copolymerisate aus Ethylenoxid und Propylenoxid, polyalkoxylierte Etherdiole, polyalkoxylierte Fettalkohole oder Ziegler- oder Oxoalkohole, polyalkoxylierte Alkylphenole oder polyalkoxylierte Alkylphenol-Formaldehyd-Harze oder Mischungen hieraus verwendet.

3. Verfahren nach den Ansprüchen 1 oder 2, dadurch gekennzeichnet, daß man die grenzflächenaktiven Substanzen in Form einer 1 bis 70 gew.-%igen Lösung in einem organischen Lösungsmittel den lösungsmittelhaltigen Mutterlaugen und Waschwässern zugibt.

4. Verfahren nach den Ansprüchen 1 bis 3, dadurch gekennzeichnet, daß man es auf die Rückgewinnung der Lösungsmittel Nitrobenzol, Chlorbenzol, Dichlorbenzole, Toluol, Xylole und Benzoesäuremethylester anwendet.

5. Verfahren nach den Ansprüchen 1 bis 4, dadurch gekennzeichnet, daß man es auf die Behandlung von lösungsmittelhaltigen Mutterlaugen und Waschwässern anwendet, die bei der Herstellung von Küpen- und Dispersionsfarbstoffen sowie optischen Aufhellern anfallen.

6. Verwendung von nichtionogenen polyalkoxylierten grenzflächenaktiven Substanzen in einer Menge von 10 bis 1000 ppm, bezogen auf das Gesamtgewicht des zu behandelnden Gemisches, bei der weitestgehenden Rückgewinnung von mit Wasser nicht mischbaren organischen Lösungsmitteln aus Mutterlaugen und Waschwässern, die bei in wasserhaltigem Medium durchgeführten oder aufgearbeiteten Synthese- und Trennverfahren anfallen.
